# EUROPEAN PATENT APPLICATION

(11) **EP 2 960 826 A1**
(43) Date of publication of application: **30.12.2015**
(21) Application number: 14173763.5
(22) Date of filing: 24.06.2014
(51) Int. Cl.: G06K 9/00

(54) **A method for monitoring a series of events to identify the occurrence of a combination of an event and a related set of parameters**

(71) Applicant: Intellicore Services, 06560 Valbonne Sophia Antipolis (FR)
(72) Inventor: Trotobas, Christian, 06130 Plascassier (FR); Martiquet, Nicolas, 06600 Antibes (FR)
(74) Representative: de Zeeuw, Johan Diederick

(57) **Abstract**

The invention relates to a method for monitoring a series of events to identify the occurrence of a combination of an event and a related set of parameters, comprising at least one parameter, the method comprising the steps of:
- identifying a possible event to occur,
- monitoring the possible occurrence of the event,
- detecting the occurrence of the event,
- analysing the occurred event and identifying a first set of parameters, comprising at least one parameter linked to the event,
- defining a combination of the event and the identified first set of parameters linked to the event,
- monitoring the possible occurrence of the defined combination of the event and the related first set of parameters within a determined time-frame, and

either
- detecting the occurrence of the combination of the event and the related first set of parameters within said determined time-frame, and
- confirming the occurrence of the combination of the event and the related first set of parameters,

or
- detecting the non-occurrence of the combination of the event and the related first set of parameters within said determined time-frame, and
- ending the monitoring of the possible occurrence of the combination of the first event and the related first set of parameters.

## Description

### Field of the Invention

The present invention relates to a method for monitoring a series of events associated to a number of output parameters, to identify the occurring of an event with a given set of output parameter values.

The method according to the present invention is particularly adapted to, in a first instance, monitor a limited number of possible events, wherein the repetition of a combination of an event and a related set of parameters could trigger the monitoring of a new event.

### Background of the Invention

In the prior art it is known that for specific events and activities, information is sent, in real time, to end users who have an interest in receiving a message indicating the occurrence of such an event or activity automatically after the occurrence of the activity or event has been detected.

Examples thereof are, for instance, events and activities relating to the stock exchange. For example, in the event a particular share suddenly increases or decreases in value, it is of particular interest, and indeed sometimes essential, for end users to receive such information within a very short timeframe after the detection of the occurrence of such an event or activity.

A further known use of sending real-time information about events and activities relates to sports events.

When a sports event takes place, it may be of interest to many people to receive information about the highlights of the sports event in real time in order to stay informed about an ongoing sports event.

In the case of a sports event, a limited number of predictable highlights which may be of interest to end users can be identified prior to the start of the sports event. If the example of a football match is used, such highlights may include:
- team A has scored a goal,
- a player of Team A has received a yellow card or a red card,
- team A has been awarded a free kick, a corner or a penalty, etc.

Further predictable information an end user may wish to receive in real time is an update of the score line during the football match.

It is well-known that sports events that are broadcast on television are generally commentated by an expert. The role of a commentator is to relay interesting facts and information in order to enhance the experience of the viewer watching the same event at home. The commentator may, for instance, be able to provide insight into the behaviour of a player during the sports game. Again using the example of a football match, the commentator may, for instance, note that if a specific player receives the ball, he is likely to make a pass to a player on the right hand side of the pitch. Viewers watching the match at home would not have the same level of awareness of the events and activities happening on the pitch. We can see here that the added value of such an expert is to be able to comment about elaborate, unpredictable events, rather than just saying "Team A has scored a goal" or "A player of Team A has received a yellow card or a red card".

In practice, it is impossible to foresee all possible events and activities that might occur during an event, such as a sports event. However, it appears that there is a need for a method and a system that is able to analyse an event or an activity, identify repeated combinations of output parameter values for an event and a related set of parameters and allow this repetition of combinations to be highlighted to end users.

Accordingly, it is an object of the present invention to provide a method for monitoring a series of events to identify the occurring of a combination of an event and a related set of parameters, and to alert the occurrence of said combination of outputs to end users.

### Summary of the Invention

According to a first aspect of the invention, there is provided a method for monitoring a series of events to identify the occurrence of a combination of an event and a related set of parameters, comprising at least one parameter, the method comprising the steps of:
- identifying a possible event to occur,
- monitoring the possible occurrence of the event,
- detecting the occurrence of the event,
- analysing the occurred event and identifying a first set of parameters comprising at least one parameter linked to the event,
- defining a combination of the event and the identified at least one first set of parameters linked to the event,
- monitoring the possible occurrence of the defined combination of the event and the related first set of parameters within a determined time-frame, and
   either
   - detecting the occurrence of the combination of the event and the related first set of parameters within said determined time-frame, and
   - confirming the occurrence of the combination of the event and the related first set of parameters,
   or
   - detecting the non-occurrence of the combination of the event and the related first set of parameters within said determined time-frame, and
   - ending the monitoring of the possible occurrence of the combination of the first event and the related first set of parameters.

According to the present invention, it is possible that the method comprises the steps of:
- monitoring the possible occurrence of the event,
- detecting the occurrence of the event,
- analysing the occurred event and identifying a second set of parameters comprising at least one parameter linked to the event,
- defining a combination of the event and the identified second set of parameters linked to the event,
- monitoring the possible occurrence of the defined combination of the event and the related second set of parameters within a determined time-frame, and
either
- detecting the occurrence of the combination of the event and the related second set of parameters within said determined time-frame, and
- confirming the occurrence of the combination of the event and the related second set of parameters,
or
- detecting the non-occurrence of the combination of the event and the related second set of parameters within said determined time-frame, and
- ending the monitoring of the possible occurrence of the combination of the event and the related second set of parameters.

According to the present invention, it is possible that the step of confirming the occurrence of the event and the related or second set of parameters comprises the steps of:
- generating a message related to the occurrence of the combination of the event and the related first or second set of parameters, and
- allowing access to the generated message.

According to the present invention, it is possible that the method comprises, after the step of detecting the combination of the event and the related first or second set of parameters within said determined time-frame, the steps of:
- adding one occurrence to a total of occurrences of the combination of the event and the related first or second set of parameters within said determined time-frame, in order to obtain a new total of occurrences,
- comparing the new total of occurrences with a determined threshold, and
- executing a dedicated action if the new total equals or exceeds the determined threshold.

According to the present invention, it is possible that the method comprises the steps of:
- identifying a possible event to occur,
- monitoring the possible occurrence of the event,
- detecting the non-occurrence of the possible event within a set time frame, and
- ending the monitoring of the possible event.

According to a second aspect of the present invention, there is provided a computer program product comprising computer product code means configured to perform the methods above when executed.

According to a third aspect of the present invention, there is provided an electronic device comprising:
- a processing means,
- a storing unit configured to store the program code for access by the processing means.

### Brief Description of the Drawings

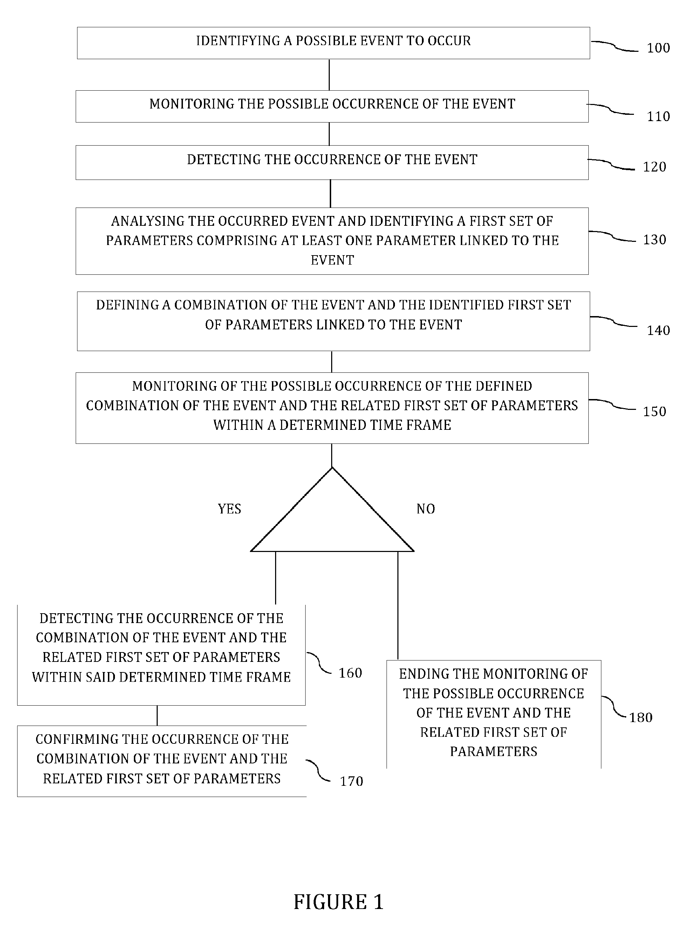

Figure 1 shows, in the form of a flow chart, the method according to the present invention for monitoring a series of events.

### Detailed Description of the Invention

The present invention relates to a method for monitoring a series of events to identify the occurring of a combination of an event and a related set of parameters comprising at least one parameter. The invention is specifically adapted to identifying the occurrence of the combination of an event and at least one parameter when, taking into account information relating to the series of events, the identification of the combination of the event and the said set of parameters, and in particular the repetition of such occurrence of said combination, is not a straightforward task for a person.

In Figure 1 in the form of a flow chart, the method of the present invention is shown in a first embodiment thereof.

In a first step 100, a possible event to occur is identified.

In a second step 110, the possible occurrence of said event is monitored.

In a third step 120, the occurrence of said event is detected.

In a fourth step 130, the occurred event is analysed to identify a set of parameters with at least one parameter linked to the event.

In a fifth step 140, a combination is defined between the event and the said set of parameters.

In a sixth step 150, the possible occurrence of the defined combination of the event and the related set of parameters is monitored within a determined time frame.

After said determined time frame, the combination of the event and the related set of parameters is either detected or it is detected that the combination of the event and the related set of parameters did not occur.

If the combination of the event and the related set of parameters have been detected within said determined time frame in step 160, the occurrence of the combination of the event and the related set of parameters is confirmed in step 170.

Alternatively, if the occurrence is not confirmed, then the monitoring of the possible occurrence of the event and the related set of parameters is ended in step 180.

A practical use of the method according to the present invention will be described below with reference being made to activities and events related to a sports event, and in particular a football match, by way of example. It should be understood that this example is used for the purpose of providing a detailed description of one possible use of the method according to the present invention. The present invention is not limited to this example and many other examples could have been given to show the advantages of using the method according to the present invention.

### Example

A football match between Team A and Team B is being held. Both teams have eleven players, one of whom is the goal-keeper.

On a playing field, there are at least one referee and at least two assistant referees.

Taking into account the rules of the game of football, a series of events that can be considered important for the progression of the game can be identified. Among these events are the following:
- Team A or Team B scores a goal,
- Team A or Team B is given a red card,
- Team A or Team B is given a yellow card,
- Team A or Team B is awarded a free kick,
- Team A or Team B is awarded a corner,
- Team A or Team B is awarded a penalty.

In addition to these events that are likely to happen during a football match, many other events and activities that are impossible to predict might occur during the football match. Moreover, the possible events and activities that might occur during a football match are so numerous that they cannot be used to create a check-list, a look-up table or a database prior to the start of a football match.

However, it appears that there are events which, if they occur, are of interest to a person watching the football match and which may enhance the experience of watching the football match.

As indicated above, the list of potential events is virtually endless, but some examples include:
- Whenever player 1 from Team A passes the ball to player 2 of Team A, the ball is lost and recovered by Team B,
- Whenever player 5 of Team A kicks the ball in the direction of the opponent's goal, the ball goes wide to the left hand side of the goal,
- Whenever player 7 of Team A participates in an attack to help his team to score a goal, the effect is that the counter-attack of Team B creates a dangerous situation.

As it will be understood, the above listed events are impossible to predict in an exhaustive manner before the start of the match and can only be detected or observed when the match is actually being played.

Moreover, even if the match is being played, some of the events described above are not easily recognisable. The viewer would need to focus on one of the players and be able to detect repeated behaviour in order to identify one or more of the above listed events.

The actual occurring of the listed events may, in practice, be more accessible for people with a certain expertise in the game of football. These people may be experienced observers, such as sports journalists or people who are or have been active in the world of football, such as team managers or players.

In order to be able to identify one or more of the above listed events and similar events without the assistance of an expert, according to the present invention, a first possible event which may be of interest to the end user is selected. Such a possible selected event may be, for example, "player 8 of Team A (who is, for instance, the captain of the team or the biggest star in the team), receives the ball and passes the ball to a team player". According to the present invention, the above formulated event may be monitored, for example, in a time frame of 45 minutes, corresponding to one half of the actual football match. The first time that the event occurs, according to the present invention, the occurred event is recognised and analysed in order to identify one set of parameters, comprising at least one parameter which is linked to the event. Such parameters may include: "foot that received the ball", "foot with which the pass was done", "player who received the pass", "was a goal scored following this pass?", etc.

If the event is "player 8 of Team A receives the ball and passes the ball to a team player", the parameter to be identified is, for instance, a further event that follows the event that is being monitored. Such a parameter could be "player 8 has received the ball with his left foot and has passed the ball to a team player with his right foot". Alternatively, the parameter could be "player 8 has passed the ball to player 9 of Team A".

Once at least one parameter related of the occurred event has been identified, a combination of the event and the related at least one parameter is defined. In the example, this combination might be "player 8 of Team A receives the ball and passes the ball to a team player" and "player who received the ball = player 9". Once this combination of events has been defined, the possible occurrence of the combination of event and parameters can be monitored.

According to the present invention, it is possible to monitor the occurrence of the event in combination with the at least one parameter, for instance during a time frame of, for example, 15 minutes. If the combination of events is detected, then, according to the present invention, a repetition of the occurrence of the event in combination with the set of parameters comprising at least one parameter has been confirmed. If in the determined time frame the occurrence of the event in combination with the at least one parameter is not detected, according to the invention, it could be decided that the possible occurrence of the event in combination with the at least one parameter is non-detected and possible new combinations of events and parameters can be monitored instead.

According to the invention, it would be possible to confirm the occurrence of a first event in combination with at least one parameter and to only alert this occurrence if the number of times that the combination of events and parameters occurs exceeds a certain threshold. Thus, for instance, if player 8 of Team A receives the ball and passes the ball to player 9 of Team A for the fifth time, a message is created to alert an end user of the occurrence of the repetition of events.

If a series of events and parameters is monitored in this manner, the result of the method of the present invention is that with the method, repeated behaviour of a certain player may be highlighted and an end user may receive information about the specific behaviour of this player.

It will be understood that once a combination of events and parameters has been defined, it is possible that the combination may occur and can be detected. Alternatively, the combined combination may not occur.

According to the present invention, in the method, a specific combination of events and parameters can be monitored for a certain amount of time. If the occurrence of the combination of events and parameters is not confirmed, monitoring can be ended. Once a certain combination of events and parameters has been confirmed, further combinations can be defined and in turn monitored. The occurrence of these further combinations can be confirmed or not.

In practice, this means that, for instance, a first possible event to occur may be monitored and once the event has been detected, a first set of parameters is identified and used to define a combination of a first event and at least one parameter to occur, wherein the combination of the first event and the at least one parameter will be monitored.

While the occurrence of the event and the at least one parameter is monitored, it is possible to continue monitoring the occurrence of the first event. Once the event occurs, the occurrence may be used to identify a further set of parameters, which could define another combination. Thereafter, this new combination could be monitored. While the possible occurrence of this new combination is monitored, the event can still be monitored. Each of the processes for monitoring the possible occurrence of either any one event or a combination of events and parameters can be restricted by time and, after the non-occurrence of either any one event or a combination of events and parameters, monitoring can be ended.

It is important to note that after the occurrence of any event or combination as described above, the occurred event or combination may be analysed to identify one or more parameters which can be used to define a new combination. New combinations can therefore be defined, each of which can be monitored in the same manner as described above.

The effect of the use of the method according to the present invention is that while the specific events and activities that happen during a football match may not be predictable at the start of the game, specific events and combination of events can be automatically defined while the match is taking place. Accordingly, the method according to the present invention allows for a detailed review of a series of events and activities which is self-learning and self-adaptive.

According to the present invention, once the occurrence of a combination of events has been confirmed, this confirmation can be highlighted to end users. This may be done in several manners. The first possible method is to use the confirmation of the occurring of a combination of events and parameters to generate a message. This message can then be made accessible for end users. The end user could be a football presenter whose job it is to provide comments in real time while the football match is taking place and being broadcast to the public. In this case, the method according to the present invention can be used to help this presenter to analyse the actual events happening on the pitch which can be seen by the viewers.

Alternatively, messages can be sent directly to end users, in any form or shape, to, for instance, mobile devices such as smart phones or tablets to allow end users to such messages.

## Claims

1. A method for monitoring a series of events to identify the occurrence of a combination of an event and a related set of parameters, comprising at least one parameter, the method comprising the steps of:
- identifying a possible event to occur,
- monitoring the possible occurrence of the event,
- detecting the occurrence of the event,
- analysing the occurred event and identifying a first set of parameters, comprising at least one parameter, linked to the event,
- defining a combination of the event and the identified first set of parameters linked to the event,
- monitoring the possible occurrence of the defined combination of the event and the related first set of parameters within a determined time-frame, and
either
- detecting the occurrence of the combination of the event and the related first set of parameters within said determined time-frame, and
- confirming the occurrence of the combination of the event and the related first set of parameters,
or
- detecting the non-occurrence of the combination of the event and the related first set of parameters within said determined time-frame, and
- ending the monitoring of the possible occurrence of the combination of the first event and the related first set of parameters.

2. The method according to claim 1, wherein the method comprises the steps of:
- monitoring the possible occurrence of the event,
- detecting the occurrence of the event,
- analysing the occurred event and identifying a second set of parameters comprising at least one parameter linked to the event,
- defining a combination of the event and the identified second set of parameters linked to the event,
- monitoring the possible occurrence of the defined combination of the event and the related second set of parameters within a determined time-frame, and
either
- detecting the occurrence of the combination of the event and the related second set of parameters within said determined time-frame, and
- confirming the occurrence of the combination of the event and the related second set of parameters,
or
- detecting the non-occurrence of the combination of the event and the related second set of parameters within said determined time-frame, and
- ending the monitoring of the possible occurrence of the combination of the event and the related second set of parameters.

3. Method according to claim 1 or 2, wherein the step of confirming the occurrence of the event and the related first or second set of parameters comprises the steps of:
- generating a message related to the occurrence of the combination of the event and the related first or second set of parameters, and
- allowing access to the generated message.

4. Method according to one of the preceding claims, wherein the method comprises, after the step of detecting the combination of the event and the related first or second set of parameters within said determined time-frame, the steps of:
- adding one occurrence to a total of occurrences of the combination of the event and the related first or second set of parameters within said determined time-frame, in order to obtain a new total of occurrences,
- comparing the new total of occurrences with a determined threshold, and
- executing a dedicated action if the new total equals or exceeds the determined threshold.

5. Method according to any of the preceding claims, wherein the method comprises the steps of:
- identifying a possible event to occur,
- monitoring the possible occurrence of the event,
- detecting the non-occurrence of the possible event within a set time frame, and
- ending the monitoring of the first possible event.

6. A computer program product comprising computer product code means configured to perform the method of any of the preceding claims when executed.

7. An electronic device comprising:
- a processing means,
- a storing unit configured to store the program code of claim 6 for access by the processing means.
